# EUROPEAN PATENT SPECIFICATION

(11) **EP 2 123 516 B1**
(45) Date of publication and mention of the grant of the patent: **16.05.2012**
(21) Application number: 09160732.5
(22) Date of filing: 20.05.2009
(51) Int. Cl.: B60R 13/10, G09F 7/18

(54) **Number-plate bracket and number-plate assembly obtained therewith.**
Kennzeichenhalterung und damit erhaltene Kennzeicheneinheit
Support de plaque d'immatriculation et ensemble de plaque d'immatriculation ainsi obtenu

(30) Priority: 20.05.2008 IT TO20080374
(43) Date of publication of application: 25.11.2009
(73) Proprietor: Omnia Press SNC, 10051 Avigliana (TO) (IT)
(72) Inventor: Fantin, Sisto, 10040, Villar Dora (TO) (IT)
(74) Representative: Robba, Pierpaolo

(56) References cited:
- EP-A- 0 444 257
- DE-A1- 4 400 148
- DE-U1- 9 015 713
- US-A1- 2007 289 176

## Description

### Field of the invention

The present invention relates to a number-plate bracket enabling securing a registration number plate to a vehicle such as a car or a lorry. The invention also relates to a number-plate bracket assembly consisting of said number-plate bracket and the registration number plate secured thereon.

### State of the art

Supports, usually referred to as number-plate brackets, are currently known, through which a vehicle registration number plate can be secured to a part of the vehicle body, such as a bumper, a bonnet or the boot door. Government authorities of some countries issue vehicle registration number plates without holes for securing them. Thus, it is generally preferable to secure such number plates to a vehicle without using such holes. Consequently, a lot of number-plate brackets have been developed which are able to have a number plate secured thereon and kept in position without using screws or rivets. Such number-plate brackets are currently made of plastic material, and an example thereof is disclosed in document EP 0 444 257 A1.
Another example is disclosed in US 2007/0259176 on which the preamble of claim 1 is based which discloses a number-plate bracket for securing a registration number plate onto a motor vehicle, wherein the registration number plate has a peripheral edge defining at least two contiguous sides that mutually intersect by forming four comers; the number-plate bracket includes a number-plate holder defining front and rear faces; the front face defines a number-plate securing seat arranged to receive the registration number plate and to fixedly keep it in a predetermined position.
Still another example is disclosed in DE 9015713 U1 which discloses a device obtained by injection moulding of plastics comprising a circumferential frame provided with parallel channels of different depth in which the opposite edges of a registration number plate can be placed. Number-plate brackets of plastic material generally do not have a particularly fine and pleasant appearance, and their aesthetical features, in particular the metallised coatings, if any, become rapidly deteriorated with use. It would be therefore desirable to have number-plate brackets made of metal, with a more pleasant and stylish appearance that deteriorates much more slowly. A material currently used to make metal number-plate brackets, to which however the number plate is secured by means of screws or rivets, is cold-pressed aluminium or aluminium-alloy sheet. However, due to the relatively low mechanical strength of such materials it is difficult to provide, on a number-plate bracket made of cold-pressed sheet, systems for securing a number plate without securing holes. In particular, it is difficult to manufacture a robust and reliable securing system from aluminium sheet, by obtaining it with a relatively simple and cheap cold-pressing process and equipment.

Thus, it is an object of the present invention to provide a number-plate bracket and a securing system for firmly and reliably securing a vehicle registration number plate to a number-plate bracket, wherein the number-plate bracket can be made by cold pressing a sheet of metal materials even with a relatively poor or low mechanical strength, by means of a relatively simple and cheap production process.

### Summary of the invention

Such an object is achieved, according to a first aspect of the present invention, by means of a number-plate bracket having the features as claimed in claim 1.

In a particular embodiment of a number-plate bracket according to the present invention, the number-plate holder is made of metal sheet, by means of a process including a cold-pressing operation. Such a cold-pressing operation may be for instance a shearing and/or drawing operation.

In a particular embodiment of the present invention, the number-plate bracket may include at least one securing insert arranged to be secured to the number-plate bracket through a mechanical coupling, e.g. a threaded coupling or a snap coupling system, so as to secure and lock the registration number plate onto the bracket. Such at least one securing insert may be made of plastic material.

In a particular embodiment of the present invention, the number-plate bracket is arranged to engage the at least one securing insert with a central portion of one of the at least two sides of the peripheral edge of the registration number plate.

In a particular embodiment of the present invention, the number-plate bracket is arranged to:
- receive and have fastened thereon a number plate having a substantially elongate shape;
   and
- to engage the at least one securing insert with a central portion of one of the longer sides of the peripheral edge of the registration number plate.

In a particular embodiment of the present invention, the number-plate bracket is arranged to receive and have fastened thereon a registration number plate having a shape selected out of the following shapes: a rectangular shape, an elongate shape, a square shape, a polygonal shape.

According to a second aspect of the present invention, such an object is achieved by means of a number-plate assembly having the features as claimed in claim 14.

The advantages attainable by the present invention will become more apparent to the skilled in the art from the following detailed description of some particular exemplary embodiments, given by way of non limiting examples and shown in the accompanying schematic Figures.

### List of the Figures

Fig. 1 is a front view of a particular embodiment of a number-plate bracket according to the present invention, as seen from its front face;
Fig. 2 is a perspective view of a detail of the front face of the number-plate bracket shown in Fig. 1;
Fig. 2A is a plan view of a detail of the assembly of the number plate and number-plate bracket shown in Figs. 1 and 4;
Fig. 3 is a perspective view of a detail of the rear face of the number-plate bracket shown in Fig. 1;
Fig. 4 is a perspective view of a rectangular registration number plate that can be mounted on the number-plate bracket shown in Fig. 1;
Fig. 5 is a first perspective view of a securing insert arranged to be snap mounted on the number-plate holder of the number-plate bracket shown in Fig. 1;
Fig. 6 is a second perspective view of the insert shown in Fig. 5;
Fig. 7 is a front view of a detail of the front face of a number-plate bracket according to a second embodiment of the present invention.

### Detailed description

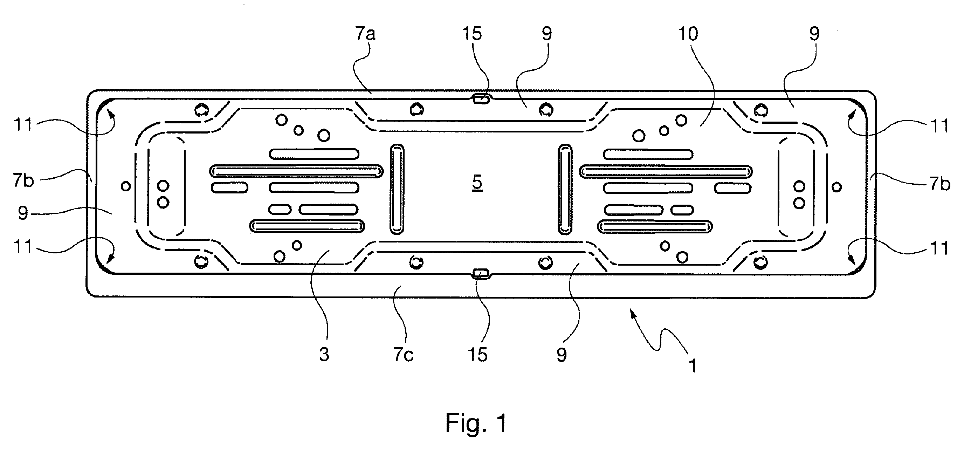

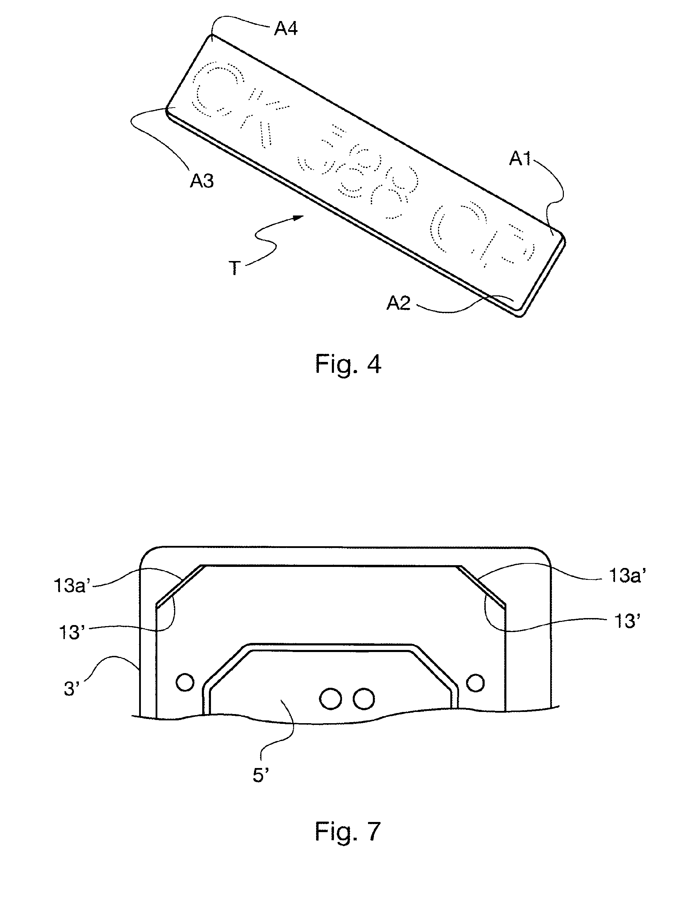

Figs. 1 to 6 relate to a particular embodiment of a number-plate bracket and a system for securing a vehicle registration number plate T, known per se and shown in Fig. 4, to a number-plate bracket 1 according to the present invention. Number-plate bracket 1 in turn includes a number-plate holder 3 that, like number plate T, has an elongate rectangular shape and is obtained by cold pressing an aluminium alloy sheet, with a thickness of the order of 1 mm, as an indication. More particularly, number plate T may have for instance the shape of a rectangle with size 519 mm x 112 mm. By convention, the face of number-plate holder 3 arranged to receive the number plate will be referred to as the "front face", whereas "rear face" will mean the face of number-plate holder 3 intended to face the vehicle.

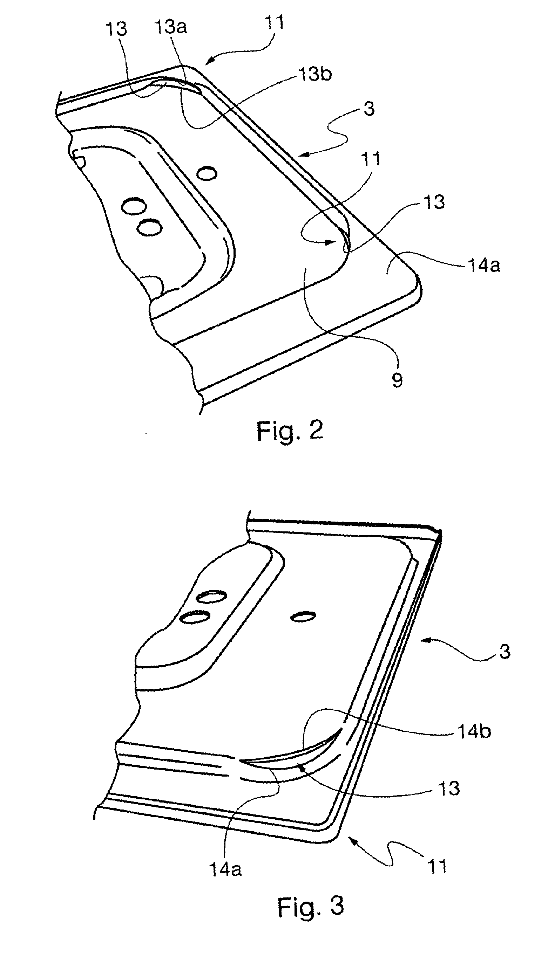

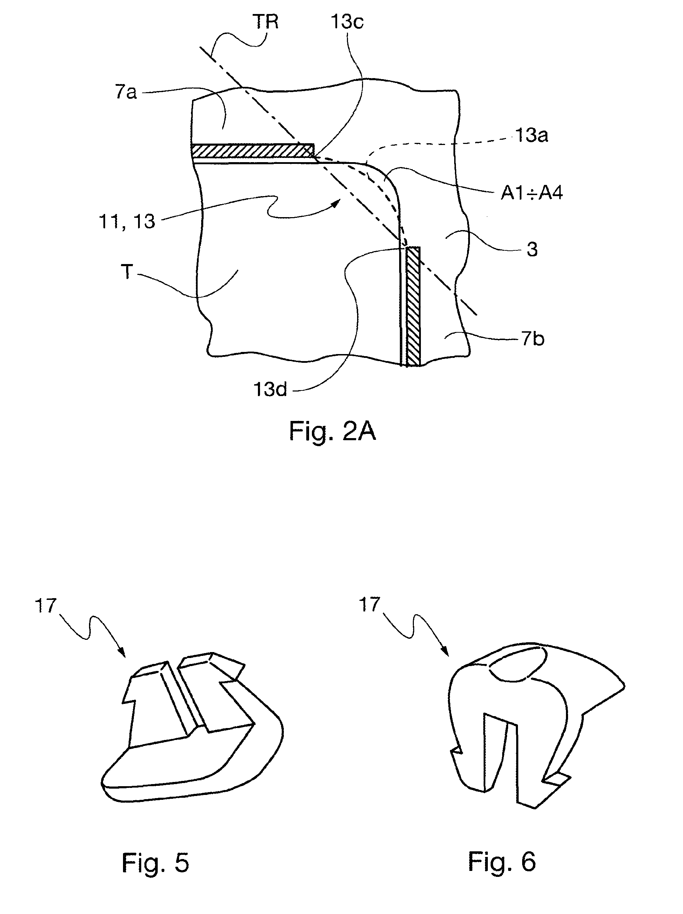

A number-plate securing seat 5, also with substantially rectangular shape and arranged to receive and hold number plate T, is formed on the front face and within the perimeter of number-plate holder 3. Number-plate securing seat 5 is defined by a relief frame 7 forming four sides 7a, 7b and 7c. Number-plate securing seat 5 further includes number-plate supporting surfaces 9 which, in the present exemplary embodiment, form shoals arranged at a first depth level according to a direction perpendicular to the front and rear faces of number-plate holder 3. Number-plate supporting surfaces 9 are arranged to allow number plate T to rest thereon. In the present exemplary embodiment, a further shoal 10 is formed at a further depth level and it has a plurality of holes and slots through which number-plate holder 3 can be fastened to the vehicle in a manner known per se, e.g. by means of screws or rivets. A so called comer-securing seat 11, shown in greater detail in Figs. 2, 2A, 3, is provided at each of the four corners of number-plate securing seat 5. In the present exemplary embodiment, each corner-securing seat 11 includes an opening 13 formed by making a cut in the sheet by means of a shearing operation and by moving the two sheared strips 14a and 14b away from each other in a direction perpendicular to the sheet surface before the shearing. Reference numeral 13a denotes the sheared edge of strip 14a, arranged to hold and secure one of corners A1 - A4 of number plate T by becoming superimposed to said corner (Fig. 2A). Reference numerals 14b and 13b denote the strip and the relevant sheared edge, respectively, which, when number plate T is secured onto number-plate bracket 1, are located beneath one of corners A1 - A4 of the number plate itself (Fig. 3). Sheared edges 13a, 13b form together opening 13. Each opening 13, and in particular edges 13a, 13b thereof, connects and joins two different contiguous and mutually intersecting sides 7a, 7b, 7c of relief frame 7.

According to the present invention, number plate T and number-plate holder 3 are so arranged that, when number plate T is properly inserted on and secured to number-plate holder 3, each corner of number plate T is inserted in opening 13 of the respective comer-securing seat 11 and extends beyond the ideal plane passing through the two opposed ends, each closer to one of the different sides of peripheral edge of number plate T, of opening 13. Such a situation is exemplified in Fig. 2A, which shows the plan view of one corner A1 of a registration number plate T inserted in opening 13 of a comer-securing seat 11. Reference numeral 13c denotes the end of opening 13 corresponding to side 7a of the peripheral edge of number plate T. Reference numeral 13d denotes the end of opening 13 corresponding to side 7b of the peripheral edge of number plate T. Edge 13a of opening 13 is shown in dashed line. Reference symbol TR indicates the trace of the ideal plane, perpendicular to the front and rear faces of number-plate T and passing through ends 13c and 13d of opening 13: referring to Fig. 2A, such an ideal plane is perpendicular to the page. Corner A1 of number plate T is inserted in opening 13 so as to extend beyond trace TR. Having:
a) comer-securing seats 11 located at the corners of number plate T;
b) at least some of the corners of the number plate inserted in the respective openings 13 so as to extend beyond the respective ones of said ideal planes TR, when number plate T is inserted on and secured to the number-plate bracket;
enables making said securing seats 11 so that they are very robust even if they are integrally formed from the sheet of number-plate holder 3 by cold pressing, and even if the material of such sheet has a relatively poor or low mechanical strength, as is for instance the case for most of the aluminium alloys to be cold pressed.. For instance, number-plate bracket 1 shown in Figs. 1 to 6 has been made from an aluminium-alloy sheet 0.5 mm thick, i.e. a very thin sheet. As a comparison, fins 25, 27 shown in Fig. 5 of the afore-mentioned document EP 0 444 257 A1 can be considered. Such fins are located substantially at the midpoints of the peripheral sides of the number plate to be secured, and in any case they are not located at the corners of the number plate: if one would attempt to make such prior-art fins 25, 27 of cold-pressed aluminium sheet, they would be much less solid and robust, or much more expensive and complex to be made (provided that they can be made), than strips 14a securing number-plate bracket 1 according to the present invention. Preferably therefore, in some embodiments of the present invention, such as the ones shown in accompanying Figures 1 to 7, each comer-securing seat 11 is arranged so that it does not engage the central portions of the sides of the peripheral edges of number plate T, or anyway portions close to the midpoints of such sides.

In the embodiment shown in Figs. 1 to 6, two seats 15 are formed on number-plate holder 3 for allowing snap-coupling two securing inserts 17 (Figs. 1, 5 and 6). Seats 15 are located substantially at the midpoints of long sides 7a, 7c of number-plate securing seat 5. Securing inserts 17 may be made for instance of plastic material and they may have a very small size, for instance, a maximum size lower than 1 cm, while ensuring a proper locking of a vehicle number plate of the usual size to be mounted on the rear of a vehicle.

Preferably, as in the embodiments shown in Figs. 1 to 7, edges 13a of locking strips 14a, 14a' have a substantially non-convex shape. More particularly, edges 13a of locking strips 14a may be concave, for instance shaped as an arc of circumference (Figs. 1 to 6), or straight (Fig. 7). Such shapes give a particular robustness to locking strips 14a and are particularly simple to be made by shearing.

In order to secure number plate T on number-plate bracket 1, the two corners A1, A2 of one end, for instance the right-side end, of number plate T are first inserted into the corresponding comer-securing seats 11. Thereafter, by slightly bending the number plate, the other two corners A3, A4 of the other end, for instance the left-side end, of number plate T are inserted into the two other comer-securing seats 11. Eventually, number plate T is finally locked by inserting both securing inserts 17 and snap-coupling them into the respective seats 15. Securing inserts 17, by locking number plate T at the midpoints of its long sides, prevent number plate T from becoming accidentally detached or from vibrating while the vehicle is being used. Number plate T secured in this manner is difficult to be detached even by ill-intentioned people. The assembly of the number plate and the number-plate bracket is aesthetically very pleasant and stylish, both because for instance its visible parts are or may be almost only metallic, and because the number-plate securing system described above, and in particular locking strips 14a, can be integrally formed from the metal number-plate holder 3 of number-plate bracket with particularly simple and essential shapes. Moreover, the present invention allows making number-plate holders by means of very simple and cheap workings. For instance, number-plate holder 3 shown in Figs. 1 to 6, or holder 3' shown in Fig. 7, can be obtained from a sheet by cold pressing through a single drawing operation and a single shearing operation, and also its possible manufacturing by means of step dies could be anyway performed through a relatively low number of drawing and shearing operations, and with relatively cheap dies.

The exemplary embodiments described above can undergo several changes and modifications without departing from the scope of the present invention. For instance, number plate T could be secured to number-plate bracket 1 even by means of more than two securing inserts 17, or by means of rivets and/or screws. A number-plate bracket according to the present invention can be used to secure both rear and front number plates for motor vehicles. A number-plate bracket according to the present invention can be made of materials other than more or less alloyed aluminium sheets, and can be made for instance also of sheets of iron metals, brass and so on.

The examples and the lists of possible variations in the present application are to be intended as non-exhaustive lists.

## Claims

1. A number-plate bracket (1) for securing a registration number plate (T) onto a motor vehicle, wherein:
- the registration number plate (T) has a peripheral edge defining at least two contiguous sides that mutually intersect by forming at least one corner (A1, A2, A3, A4);
- the number-plate bracket (1) includes a number-plate holder (3) made of a sheet of material and defining front and rear faces;
- the front face forms a number-plate securing seat (5) arranged to receive the registration number plate (T) and to fixedly keep it in a predetermined position;
- the number-plate securing seat (5) includes at least one corner-securing seat (11) arranged to engage and secure the at least one corner (A1, A2, A3, A4) of the registration number plate (T); **characterized in that**
- the at least one corner-securing seat (11) comprises a cut in said sheet of material which defines a corresponding opening (13); whereby when the registration number plate (T) is properly inserted in the number-plate securing seat (5), the at least one corner (A1, A2, A3, A4) of the number plate (T) is inserted in the opening (13) so as to extend beyond the ideal plane (TR), perpendicular to the front face of the number-plate holder (3) and passing through the two opposed ends (13c, 13d), each closer to one of the at least two contiguous and mutually intersecting sides of the peripheral edge of the number plate (T).

2. The number-plate bracket as claimed in claim 1, wherein the opening (13) of the at least one comer-securing seat (11) is defined by an edge, and the portion (13a) of said edge arranged to be superimposed to the face of the number plate (T) to be turned towards the viewers during use of the number-plate bracket (1) has a shape selected out of the following group: a substantially non-convex shape, a substantially rectilinear shape, a substantially concave shape.

3. The number-plate bracket as claimed in claim 1 or 2, wherein the at least one corner-securing seat (11) forms a locking strip (14a) arranged to engage and secure the at least one corner (A1, A2, A3, A4) of the registration number plate (T), by being superimposed to the face of the number plate (T) to be turned towards the viewers during use of the number-plate bracket (1).

4. The number-plate bracket as claimed in one or more of claims 1 to 3, wherein the peripheral edge of the registration number plate (T) forms at least two corners (A1, A2, A3, A4), and the number-plate holder (3) has at least two corner-securing seats (11), each arranged to receive and lock one of the at least two corners (A1, A2, A3, A4) of the number plate.

5. The number-plate bracket as claimed in one or more of claims 1 to 4, wherein the peripheral edge of the registration number plate (T) forms at least four corners (A1, A2, A3, A4), and the number-plate holder (3) has at least four corner-securing seats (11), each arranged to receive and lock one of the at least four corners (A1, A2, A3, A4) of the number plate.

6. The number-plate bracket as claimed in claim 3, wherein the number-plate securing seat (5) includes at least two raised edges (7a, 7b, 7c) in correspondence of two mutually intersecting sides of the peripheral edge of the registration number plate (T), and the locking strip (14a) joins or anyway connects the at least two raised edges (7a, 7b, 7c).

7. The number-plate bracket as claimed in one or more of claims 1 to 6, wherein the at least one comer-securing seat (11) is arranged to engage the at least one corner (A1, A2, A3, A4) of the registration number plate (T) without engaging the whole of one side of the peripheral edge of the number plate (T).

8. The number-plate bracket as claimed in one or more of claims 1 to 7, wherein the at least one corner-securing seat (11) is arranged to engage the at least one corner (A1, A2, A3, A4) of the registration number plate (T) without engaging the central portion of one side of the peripheral edge of the number plate (T), or a portion close to the midpoint of one side of the peripheral edge of the number plate (T).

9. The number-plate bracket as claimed in one or more of the preceding claims, wherein the number-plate holder (3) is made of metal sheet.

10. The number-plate bracket as claimed in one or more of the preceding claims, wherein the number-plate holder (3) is made by cold pressing.

11. The number-plate bracket as claimed in one or more of the claims 1 to 10, wherein the at least one comer-securing seat (11) is integrally formed from the number-plate holder (3).

12. The number-plate bracket as claimed in one or more of the claims 1 to 11, wherein the at least one corner-securing seat (11) is made by cold pressing, and for instance by means of one or more shearing and/or drawing operations.

13. The number-plate bracket as claimed in one or more of the preceding claims, including at least one securing insert (17) arranged to be secured by mechanical coupling, such as a threaded coupling or a snap-coupling system, to the number-plate holder (3), so as to secure and lock the registration number plate (T) on the holder.

14. A number-plate assembly, including a number-plate bracket (1) having the features as claimed in one or more of the preceding claims, and a registration number plate (T) having a peripheral edge defining at least two contiguous sides that mutually intersect by forming at least one corner (A1, A2, A3, A4).

## Patentansprüche

1. Nummernschildträger (1) zum Befestigen eines Nummernschildes (T) an einem Kraftfahrzeug, wobei:
das Nummernschild (T) eine Umfangskante aufweist, die wenigstens zwei angrenzende Seiten definiert, die sich unter Bildung mindestens einer Ecke (A1, A2, A3, A4) schneiden;
der Nummernschildträger (1) einen Nummernschildhalter (3) aufweist, der aus einem Plattenmaterial hergestellt ist und eine Vorderseite sowie eine Rückseite definiert;
die Vorderseite einen Sicherungssitz (5) für das Nummernschild ausbildet,
der zur Aufnahme des Nummernschildes (T) und zur Fixierung desselben in einer vorgegebenen Position ausgelegt ist;
der Sicherungssitz (5) für das Nummernschild mindestens einen eckensichernden Sitz (11) aufweist, der zur Arretierung und Sicherung der mindestens einen Ecke (A1, A2, A3, A4) des Nummernschildes (T) ausgelegt ist;
**dadurch gekennzeichnet, dass**
der mindestens eine eckensichernde Sitz (11) einen Einschnitt in dem Plattenmaterial aufweist, der eine entsprechende Öffnung (13) bestimmt; wobei, bei richtig in den Sicherungssitz (5) eingesetztem Nummernschild (T), die mindestens eine Ecke (A1, A2, A3, A4) des Nummernschildes (1) in die Öffnung (13) eingeführt ist, so dass sie sich über die ideale Ebene (TR) hinaus erstreckt, die senkrecht zu der Vorderseite des Nummernschildhalters (3) verläuft und durch die beiden entgegengesetzten Enden (13c, 13d) verläuft, die jeweils näher an einer der wenigstens zwei angrenzenden und sich schneidenden Seiten der Umfangskante des Nummernschildes (T) liegen.

2. Nummernschildträger nach Anspruch 1, wobei die Öffnung (13) des wenigstens einen eckensichernden Sitzes (11) durch eine Kante definiert ist, und der Teil (13a) dieser Kante, der zum Bedecken der Vorderseite des Nummernschildes (T) ausgelegt ist, die bei Einsatz des Nummernschildträgers (1) den Betrachtern zugewandt ist, eine Form aufweist, die aus der folgenden Gruppe ausgewählt worden ist: eine im Wesentlichen nicht-konvexe Form, eine im Wesentlichen geradlinige Form, eine im Wesentlichen konkave Form.

3. Nummernschildträger nach Anspruch 1 oder 2, wobei der mindestens eine eckensichernde Sitz (11) eine Verriegelungsleiste (14a) ausbildet, die zur Arretierung und Sicherung der mindestens einen Ecke (A1, A2, A3, A4) des Nummernschildes (T) durch Bedecken der des Seite Nummernschildes (T), die bei Einsatz des Nummernschildbügels (1) Betrachtern zugewandt ist, ausgebildet ist.

4. Nummernschildträger nach einem oder mehreren der Ansprüche 1 bis 3, wobei die Umfangskante des Nummernschildes (T) mindestens zwei Ecken (A1, A2, A3, A4) ausbildet und der Nummernschildhalter (3) mindestens zwei eckensichernde Sitze (11) aufweist, die jeweils zur Aufnahme und Fixierung einer der mindestens zwei Ecken (A1, A2, A3, A4) des Nummernschildes (T) ausgelegt sind.

5. Nummernschildträger nach einem oder mehreren der Ansprüche 1 bis 4, wobei die Umfangskante des Registriernummernschildes (T) mindestens vier Ecken (A1, A2, A3, A4) ausbildet und der Nummernschildhalter (3) mindestens vier eckensichernde Sitze (11) aufweist, die jeweils zur Aufnahme und Fixierung einer der mindestens vier Ecken (A1, A2, A3, A4) des Nummernschildes (T) ausgelegt ist.

6. Nummernschildträger nach Anspruch 3, wobei der Sicherungssitz (5) für das Nummernschild mindestens zwei erhabene Kanten (7a, 7b, 7c) aufweist, die zwei sich schneidenden Seiten der Umfangskante des Nummernschildes (T) entsprechen, und wobei die Verriegelungsleiste (14a) die mindestens zwei angehobenen Kanten (7a, 7b, 7c) verbindet oder zumindest zusammenfügt.

7. Nummernschildträger nach einem oder mehreren der Ansprüche 1 bis 6, wobei der mindestens eine eckensichernde Sitz (11) angeordnet ist, um die mindestens eine Ecke (A1, A2, A3, A4) des Nummernschildes (T) zu arretieren ohne dabei eine Seite der Umfangskante des Nummernschildes (T) vollständig zu umfassen.

8. Nummernschildträger nach einem oder mehreren der Ansprüche 1 bis 7, wobei der mindestens eine winkelsichernde Sitz (11) angeordnet ist, um mindestens eine Ecke (A1, A2, A3, A4) des Nummernschildes (T) zu arretieren ohne den mittleren Teil einer Seite der Umfangskante des Nummernschildes (T) oder einen nah am Mittelpunkt einer Seite der Umfangskante des Nummernschildes (T) liegenden Teil der Umfangskante des Nummernschildes (T) zu umfassen.

9. Nummernschildträger nach einem oder mehreren der vorhergehenden Ansprüche, wobei der Nummernschildhalter (3) aus Blech besteht.

10. Nummernschildträger nach einem oder mehreren der vorhergehenden Ansprüche, wobei der Nummernschildhalter (3) durch Kaltpressen hergestellt ist.

11. Nummernschildträger nach einem oder mehreren der Ansprüche 1 bis 10, wobei der mindestens eine eckensichernde Sitz (11) aus dem Nummernschildhalter (3) integral ausgebildet ist.

12. Nummernschildträger nach einem oder mehreren der Ansprüche 1 bis 11, wobei der mindestens eine eckensichernde Sitz (11) durch Kaltpressen hergestellt ist, beispielsweise mittels eines oder mehrerer Scher- und/oder Ziehprozesse.

13. Nummernschildträger nach einem oder mehreren der vorhergehenden Ansprüche, mit wenigstens einem Sicherungseinsatz (17), der zur Befestigung an dem Nummernschild (T) durch eine mechanische Verbindung, wie zum Beispiel eine Schraubverbindung oder ein Schnellverschlusssystem, ausgelegt ist, um das Nummerschild (T) an dem Nummernschildhalter (3) zu sichern und zu fixieren.

14. Nummernschildverbund, umfassend einen Nummernschildträger (1) mit den Merkmalen nach einem oder mehreren der vorhergehenden Ansprüche, und ein Nummernschild (T), das eine Umfangskante aufweist, die wenigstens zwei angrenzende Seiten definiert, die sich unter Bildung mindestens einer Ecke (A1, A2, A3, A4) schneiden.

## Revendications

1. Support de plaque d'immatriculation (1) permettant de fixer une plaque d'immatriculation (T) sur un véhicule automobile, dans lequel :
- la plaque d'immatriculation (T) présente un bord périphérique définissant au moins deux côtés contigus qui se croisent l'un ou l'autre en formant au moins un coin (A1, A2, A3, A4) ;
- le support de plaque d'immatriculation (1) comprend un portoir de plaque d'immatriculation (3) fait d'une feuille de matériau et définissant des faces avant et arrière ;
- la face avant forme un siège de maintien de plaque d'immatriculation (5) conçu pour recevoir la plaque d'immatriculation (T) et pour la maintenir de manière fixe dans une position prédéterminée ;
- le siège de maintien de plaque d'immatriculation (5) comprend au moins un siège de maintien de coin (11) conçu pour coopérer avec et maintenir le au moins un coin (A1, A2, A3, A4) de la plaque d'immatriculation (T) ;
**caractérisé en ce que**
- le au moins un siège de maintien de coin (11) comprend une incision dans ladite feuille de matériau, qui définit une ouverture (13) correspondante ; de sorte que, lorsque la plaque d'immatriculation (T) est correctement insérée dans le siège de maintien de plaque d'immatriculation (5), le au moins un coin (A1, A2, A3, A4) de la plaque d'immatriculation (T) s'insère dans l'ouverture (13) de façon à s'étendre au-delà du plan idéal (TR), perpendiculaire à la face avant du portoir de plaque d'immatriculation (3) et passant par les deux extrémités opposées (13c, 13d), chacune étant plus proche de l'un des au moins deux côtés contigus, qui se croisent l'un l'autre, du bord périphérique de la plaque d'immatriculation (T).

2. Support de plaque d'immatriculation selon la revendication 1, dans lequel l'ouverture (13) du au moins un siège de maintien de coin (11) est définie par un bord, et la partie (13a) dudit bord, conçue pour se superposer à la face de la plaque d'immatriculation (T) qui doit être tournée vers les observateurs pendant l'utilisation du support de plaque d'immatriculation (1), présente une forme choisie dans le groupe suivant : une forme essentiellement non convexe, une forme essentiellement rectiligne, une forme essentiellement concave.

3. Support de plaque d'immatriculation selon la revendication 1 ou 2, dans lequel le au moins un siège de maintien de coin (11) forme une bande de blocage (14a) conçue pour coopérer avec et maintenir le au moins un coin (A1, A2, A3, A4) de la plaque d'immatriculation (T), en se superposant à la face de la plaque d'immatriculation (T) qui doit être tournée vers les observateurs pendant l'utilisation du support de plaque d'immatriculation (1).

4. Support de plaque d'immatriculation selon une ou plusieurs des revendications 1 à 3, dans lequel le bord périphérique de la plaque d'immatriculation (T) forme au moins deux coins (A1, A2, A3, A4), et le portoir de plaque d'immatriculation (3) présente au moins deux sièges de maintien de coin (11), chacun étant conçu pour recevoir et bloquer l'un des au moins deux coins (A1, A2, A3, A4) de la plaque d'immatriculation.

5. Support de plaque d'immatriculation selon une ou plusieurs des revendications 1 à 4, dans lequel le bord périphérique de la plaque d'immatriculation (T) forme au moins quatre coins (A1, A2, A3, A4), et le portoir de plaque d'immatriculation (3) présente au moins quatre sièges de maintien de coin (11), chacun étant conçu pour recevoir et bloquer l'un des au moins quatre coins (A1, A2, A3, A4) de la plaque d'immatriculation.

6. Support de plaque d'immatriculation selon la revendication 3, dans lequel le siège de maintien de plaque d'immatriculation (5) comprend au moins deux bords surélevés (7a, 7b, 7c) en correspondance avec deux bords qui se croisent l'un l'autre du bord périphérique de la plaque d'immatriculation (T), et la bande de blocage (14a) relie ou raccorde d'une quelconque façon les au moins deux bords surélevés (7a, 7b, 7c).

7. Support de plaque d'immatriculation selon une ou plusieurs des revendications 1 à 6, dans lequel le au moins un siège de maintien de coin (11) est conçu pour coopérer avec le au moins un coin (A1, A2, A3, A4) de la plaque d'immatriculation (T), sans coopérer avec l'ensemble dudit un côté du bord périphérique de la plaque d'immatriculation (T).

8. Support de plaque d'immatriculation selon une ou plusieurs des revendications 1 à 7, dans lequel le au moins un siège de maintien de coin (11) est conçu pour coopérer avec le au moins un coin (A1, A2, A3, A4) de la plaque d'immatriculation (T) sans coopérer avec la partie centrale dudit un côté du bord périphérique de la plaque d'immatriculation (T) ou avec une partie proche du point central dudit un côté du bord périphérique de la plaque d'immatriculation (T).

9. Support de plaque d'immatriculation selon une ou plusieurs des revendications précédentes, dans lequel le portoir de plaque d'immatriculation (3) est fait d'une feuille de métal.

10. Support de plaque d'immatriculation selon une ou plusieurs des revendications précédentes, dans lequel le portoir de plaque d'immatriculation (3) est fait par emboutissage à froid.

11. Support de plaque d'immatriculation selon une ou plusieurs des revendications 1 à 10, dans lequel le au moins un siège de maintien de coin (11) est formé d'un seul tenant avec le portoir de plaque d'immatriculation (3).

12. Support de plaque d'immatriculation selon une ou plusieurs des revendications 1 à 11, dans lequel le au moins un siège de maintien de coin (11) est fait par emboutissage à froid et, par exemple, au moyen d'une ou plusieurs opérations de cisaillage et/ou d'étirage.

13. Support de plaque d'immatriculation selon une ou plusieurs des revendications précédentes, comprenant au moins un insert de fixation (17) conçu pour être fixé par couplage mécanique, tel un système de couplage par filetage ou un système de couplage par encliquetage, sur le portoir de plaque d'immatriculation (3), afin de maintenir et bloquer la plaque d'immatriculation (T) sur le portoir.

14. Ensemble de plaque d'immatriculation comprenant un support de plaque d'immatriculation (1) présentant les caractéristiques décrites dans une ou plusieurs des revendications précédentes, et une plaque d'immatriculation (T) présentant un bord périphérique définissant au moins deux côtés contigus qui se croisent l'un l'autre en formant au moins un coin (A1, A2, A3, A4).
